# Europäisches Patentamt
# European Patent Office
# Office européen des brevets

(19)

(11) Numéro de publication: **0 073 023**
**B1**

(12)

# FASCICULE DE BREVET EUROPEEN

(45) Date de publication du fascicule du brevet:
**20.12.89**

(51) Int. Cl.⁴: **G 02 B 6/44**

(21) Numéro de dépôt: **82107581.9**

(22) Date de dépôt: **19.08.82**

(54) **Dispositif de connexion pour câble comprenant des fibres optiques et des conducteurs métalliques.**

(30) Priorité: **26.08.81 FR 8116292**

(43) Date de publication de la demande:
**02.03.83 Bulletin 83/9**

(45) Mention de la délivrance du brevet:
**20.12.89 Bulletin 89/51**

(84) Etats contractants désignés:
**CH DE FR GB IT LI NL SE**

(56) Documents cités:
**FR-A-2 278 088**
**FR-A-2 427 704**
**FR-A-2 473 733**
**GB-A-2 092 396**
**US-A-4 124 272**

**PATENTS ABSTRACTS OF JAPAN, vol. 5, no.**
**138(P-78)[810], 2 septembre 1981; & JP - A - 56 74 209**
**(NIPPON DENKI K.K.) 19-06-1981**
**27TH ELECTRONIC COMPONENTS CONFERENCE,**
**16-18 mai 1977, pages 557-560, Stouffer's national**
**center inn, Arlington (US); J.A. HENDERSON: "Fiber**
**optic rotational coupler."**

(73) Titulaire: **LES CABLES DE LYON Société anonyme dite:,**
**170 quai de Clichy, F-92111 Clichy Cedex (FR)**

(72) Inventeur: **Colin, Gérard, 68, rue Ph. Dartis,**
**F-93800 Epinay sur Seine (FR)**
Inventeur: **Kerduel, Christian, 12, rue des Frères**
**François, F-78700 Conflans Sainte Honorine (FR)**

(74) Mandataire: **Weinmiller, Jürgen et al,**
**Lennéstrasse 9 Postfach 24, D-8133 Feldafing (DE)**

ACTORUM AG

## Description

La présente invention concerne un dispositif de connexion entre deux câbles à fibres optiques, comprenant

a) une embase comportant un corps d'embase muni d'un embout pour fibres optiques à raccorder, et un organe de positionnement angulaire,

b) un connecteur comportant un corps de jonction muni d'un embout pour fibres optiques à raccorder, et un organe de positionnement angulaire, avec lequel on veut associer également la connexion de conducteurs électriques.

Le problème de la connexion entre un câble comprenant à la fois des fibres optiques et des conducteurs métalliques, notamment pour transmission d'énergie électrique de l'alimentation de répéteurs de câbles sous-marins, et soit un autre câble, soit un élément de câble de liaison avec un répéteur, est relativement nouveau et n'a pas encore reçu de solution satisfaisante. Il tend à se produire au niveau de telles connexions des torsions, résultant du fait que le câble ne peut tourner autour de son axe, et susceptibles d'endommager la gaine du câble ou l'enveloppe du dispositif de connexion, et de permettre l'introduction d'eau à l'intérieur du câble ou de la connexion.

La présente invention permet notamment de remédier à ces inconvénients. Elle a pour but de procurer un dispositif qui assure, avec une certaine liberté de rotation, entre les câbles en vis-à-vis, ou entre un câble et l'élément de câble de liaison avec un répéteur, une connexion simultanée par un seul ensemble mécanique.

Le dispositif de connexion selon l'invention est caractérisé en ce que, afin de permettre des connexions optique et électrique simultanées entre les deux câbles avec une liberté de rotation relative limitée,

c) l'embase comporte en outre un barillet à pièces de raccordement électrique mâles,

d) le connecteur comporte en outre un barillet à pièces de raccordement électrique femelles,

e) le corps de jonction du connecteur ou le corps d'embase de l'embase est muni d'une chemise externe et de moyens permettant une rotation relative limitée angulairement de la chemise externe par rapport à l'extrémité du câble correspondant.

Il répond en outre de préférence à au moins l'une des caractéristiques suivantes:

– Les moyens permettant une rotation relative sont disposés de façon que ladite rotation soit au maximum voisine de 360°.

– Les moyens permettant une rotation relative comprennent une bille disposée dans une cavité du corps de jonction du connecteur ou du corps d'embase, et une bille disposée dans une cavité de la chemise externe susceptible de tourner autour du corps de jonction du connecteur ou du corps d'embase, lesdites billes pénétrant l'une et l'autre dans une gorge circonférentielle séparant ledit corps et ladite chemise externe.

– Le corps de jonction du connecteur ou le corps d'embase comporte une cavité interne permettant l'accumulation d'une surlongueur de fibres optiques et de conducteurs correspondant au minimum à la rotation relative maximale prévue.

– l'extrémité de la chemise externe la plus proche du câble est reliée à la gaine de celui-ci par une coiffe élastique entourant un volume interne rempli d'un liquide visqueux.

Il est décrit ci-après, à titre d'exemple et en référence aux figures du dessin annexé, un dispositif de connexion selon l'invention entre un câble à deux fibres optiques et deux conducteurs électriques et un répéteur.

La figure 1 représente en coupe diamétrale, écartés l'un de l'autre, le barillet du connecteur du câble et le barillet de l'embase du répéteur.

La figure 2 représente en coupe diamétrale le connecteur du câble, avec son organe permettant la rotation relative du connecteur par rapport à l'extrémité du câble.

La figure 3 représente une section droite par l'axe III–III de la figure 2 montrant le fonctionnement du système de billes limitant la rotation relative.

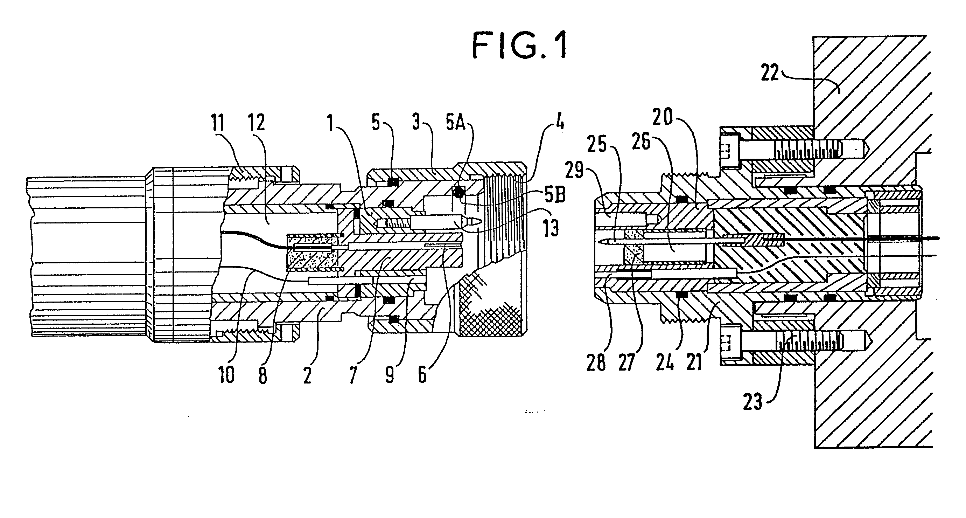

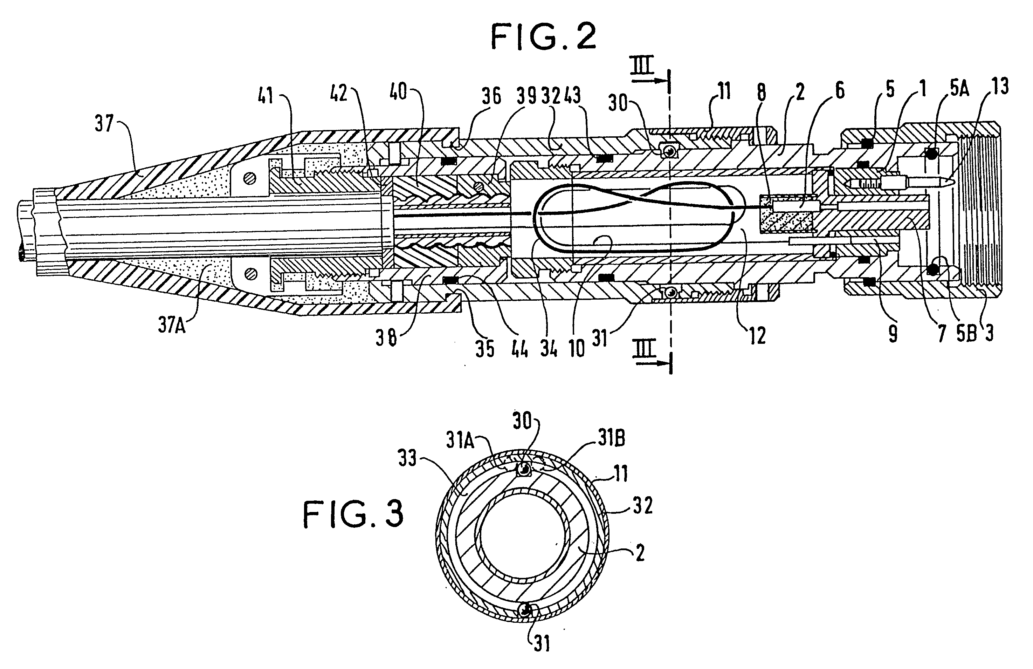

Dans la figure 1, le barillet du connecteur proprement dit 1 est disposé dans un corps de jonction de connecteur 2 sur lequel est monté un écrou d'accouplement 3 à filetage 4, muni d'une gorge interne de logement d'un segment d'étanchéité 5. Le corps de jonction du connecteur est muni sur son pourtour interne d'une gorge 5A dans laquelle est disposé un joint d'étanchéité 5B. La pince de continuité électrique 6 est disposée dans un isolant 7, au-delà de la douille isolante 8. L'embout cylindrique 9 forme le conduit de passage pour la fibre optique 10. L'écrou 11 assure la fixation au corps de jonction du connecteur 2 de la chemise extérieure du connecteur, qui apparaîtra sur la figure 2. A l'arrière de l'isolant 7 se trouve la cavité interne 12, destinée à loger les surlongueurs de fibres optiques et de conducteurs électriques. Le barillet est muni d'un pion de détrompage 13.

Le barillet de l'embase 20 est entouré d'un corps d'embase 21 fixé sur le boîtier du connecteur 22 par des boulons 23 et muni d'une gorge annulaire de logement d'un joint d'étanchéité 24. La broche de continuité électrique 25 est montée sur la perle de verre 26 et le joint 27. L'embout cylindrique 28 permet le passage d'une fibre optique. L'alésage borgne 29 forme pièce de détrompage pour le positionnement angulaire, en liaison avec le pion 13 déjà mentionné.

Les figures 2 et 3 représentent la partie du dispositif de connexion permettant le contrôle de son orientation.

Une première bille 30 est disposée dans une cavité du corps de jonction du connecteur 2. Une seconde bille 31 est disposée dans une cavité de la chemise extérieure 32 du connecteur, qui est libre en rotation autour du corps de connecteur. Ces billes font toutes deux saillie dans un espace annulaire 33. On voit que la liberté de rotation de la chemise extérieure n'est limitée que par l'arrivée en butée de la bille 31 contre la bille 30, soit par la gauche (position 31A), soit par la droite

(position 31B). La liberté de rotation relative est donc peu inférieure à 360°.

Dans la cavité interne 12 s'étendent les surlongueurs de fibres optiques telles que 10 et de conducteurs électriques tels que 34 leur permettant de s'adapter aux rotations relatives du corps de jonction du connecteur par rapport à la chemise extérieure solidaire de l'extrémité du câble.

Dans sa partie arrière, la chemise 32 comporte une gorge annulaire 35, dans laquelle s'engage le bourrelet annulaire 36 d'une coiffe 37 en élastomère, qui vient entourer l'extrémité du câble.

Cette extrémité du câble est maintenue à l'intérieur de la chemise 32 à l'aide d'une pièce d'arrimage 38, munie d'une bague d'arrêt 39 et d'un joint presse-étoupe 40, entourant la gaine du câble, ce joint étant serré par l'écrou 41 et la rondelle 42. Le volume 37A intérieur à la coiffe 37 autour de l'écrou 41 est rempli d'un liquide de viscosité élevée, tel qu'une vaseline très visqueuse, du polybutène ou du polyisobutène.

D'autres joints tels que 43 entre le corps de jonction du connecteur et la chemise extérieure, et 44 entre la chemise extérieure et la pièce d'arrimage, permettent de parfaire l'étanchéité du dispositif de connexion.

## Revendications

1. Dispositif de connexion entre deux câbles à fibres optiques (10), comprenant

a) une embase comportant un corps d'embase (21) muni d'un embout (28) pour fibres optiques à raccorder, et un organe de positionnement angulaire (29),

b) un connecteur (1) comportant un corps de jonction (2) muni d'un embout (9) pour fibres optiques à raccorder et un organe de positionnement angulaire (13), caractérisé en ce que, afin de permettre des connexions optique et électrique simultanées entre les deux câbles avec une liberté de rotation relative limitée,

c) l'embase comporte en outre un barillet (20) à pièces de raccordement électrique mâles (25),

d) le connecteur comporte en outre un barillet à pièces de raccordement électrique femelles (6),

e) le corps de jonction (2) du connecteur ou le corps d'embase (21) de l'embase est muni d'une chemise externe (32) et de moyens permettant une rotation relative limitée angulairement de la chemise externe par rapport à l'extrémité du câble correspondant.

2. Dispositif de connexion selon la revendication 1, caractérisé en ce que les moyens permettant une rotation relative sont disposés de façon que ladite rotation soit au maximum voisine de 360°.

3. Dispositif selon la revendication 2, caractérisé en ce que les moyens permettant une rotation relative comprennent une bille (30) disposée dans une cavité du corps de jonction (2) du connecteur ou du corps d'embase (21), et une bille (31) disposée dans une cavité de la chemise externe (32) susceptible de tourner autour du corps de jonction du connecteur ou du corps d'embase, lesdites billes pénétrant l'une et l'autre dans une gorge circonférentielle (33) séparant ledit corps et ladite chemise externe.

4. Dispositif selon l'une des revendications 1 à 3, caractérisé en ce que le corps de jonction du connecteur (2) ou le corps d'embase (21) comporte une cavité interne (12) permettant l'accumulation d'une surlongueur de fibres optiques et de conducteurs correspondant au minimum à la rotation relative maximale prévue.

5. Dispositif selon les revendications 3 ou 4, caractérisé en ce que l'extrémité de la chemise externe la plus proche du câble est reliée à la gaine de celui-ci par une coiffe élastique (37) entourant un volume interne (37A) rempli d'un liquide visqueux.

## Claims

1. A device for interconnecting two optical fiber cables (10), comprising:

a) a socket including a socket body (21) with a ferrule (28) for receiving optical fibers to be connected and an angular position defining member (29),

b) a connector (1) including a junction body (2) fitted with a ferrule (9) for receiving optical fibers to be connected, and an angular position defining member (13), characterized in that, in order to enable the simultaneous realisation of optical and electrical connections between the two cables with a limited relative freedom of rotation

c) the socket comprises, in addition, a barrel (20) with male electrical connection members (25),

d) the connector comprises, in addition, a barrel with female electrical connection members (6),

e) the connector junction body (2) or the socket body (21) of the socket is fitted with an outer shroud (32) and with means allowing a limited relative angular rotation of the outer shroud with respect to the end of the corresponding cable.

2. A connection device according to claim 1, characterized in that the means allowing relative rotation are disposed so that said rotation is at most close to 360°.

3. A device according to claim 2, characterized in that the means allowing relative rotation comprise a ball (30) disposed in a cavity of the connector junction body (2) or of the socket body (21), and a ball (31) disposed in the cavity of the outer shroud (32) able to turn around the connector junction body or the socket body, said balls penetrating both into a circumferential groove (33) separating said body and said outer shroud.

4. A device according to any one of claims 1 to 3, characterized in that the connector junction body (2) or the socket body (21) comprises an internal cavity (12) accommodating an excess length of optical fibers and conductors corresponding at least to the maximum relative rotation provided for.

5. A device according to claim 3 or 4, characterized in that the end of the outer shroud closest to the cable is connected to its sheath by a resilient sleeve (37) surrounding an inner space (37A) filled with a viscous liquid.

**Patentansprüche**

1. Vorrichtung zur Verbindung zweier Lichtleitfaserkabel (10), mit:

a) einem Sockel, der einen Sockelkörper (21) mit einem Endstück (28) zur Aufnahme der zu verbindenden Lichtleitfasern und ein Positionierungsmittel (29) für die Winkellage auweist,

b) einem Verbinder (1), der einen Verbindungskörper (2) mit einem Endstück (9) zur Aufnahme von zu verbindenden Lichtleitfasern und ein Positionierungsmittel (13) für die Winkellage aufweist, dadurch gekennzeichnet, daß zur gleichzeitigen Herstellung der optischen und elektrischen Anschlüsse zwischen den beiden Kabeln mit einer begrenzten relativen Drehfreiheit

c) der Sockel weiter ein Trommelgehäuse (20) mit steckerartigen elektrischen Anschlußelementen (25) aufweist,

d) der Verbinder weiter ein Trommelgehäuse mit buchsenartigen elektrischen Anschlußelementen (6) aufweist,

e) der Verbindungskörper (2) des Verbinders oder der Sockelkörper (21) des Sockels mit einer äußeren Manschette (32) und mit Mitteln ausgestattet ist, die eine begrenzte relative Verdrehung der äußeren Manschette in bezug auf das entsprechende Kabelende zulassen.

2. Verbindungsvorrichtung nach Anspruch 1, dadurch gekennzeichnet, daß die Mittel, die eine relative Verdrehung zulassen, derart angeordnet sind, daß die relative Verdrehung höchstens nahe bei 360° liegt.

3. Verbindungsvorrichtung nach Anspruch 2, dadurch gekennzeichnet, daß die Mittel, die eine relative Verdrehung zulassen, eine Kugel (30), die in einem Hohlraum des Verbindungskörpers (2) des Verbinders oder des Sockelkörpers (21) untergebracht ist, sowie eine Kugel (31) aufweisen, die in einem Hohlraum der äußeren Manschette (23) untergebracht ist und sich um den Verbindungskörper des Verbinders oder den Sockelkörper drehen kann, wobei beide Kugeln in eine Umfangsnut (33) eingreifen, die den Körper und die äußere Manschette voneinander trennen.

4. Verbindungsvorrichtung nach einem der Ansprüche 1 bis 3, dadurch gekennzeichnet, daß der Verbindungskörper (2) des Verbinders oder der Sockelkörper (21) einen inneren Hohlraum (12) besitzen, der ein Ansammeln von Überlängen der Lichtleitfasern und der Leiter entsprechend mindestens der maximal vorgesehenen relativen Verdrehung ermöglicht.

5. Verbindungsvorrichtung nach den Ansprüchen 3 oder 4, dadurch gekennzeichnet, daß das dem Kabel am nächsten liegende Ende der äußeren Manschette mit der Kabelhülle durch eine elastische Kappe (37) verbunden ist, die einen mit einer viskosen Flüssigkeit gefüllten Innenraum (37A) umgibt.

# FIG.1

EP 0 073 023 B1

FIG.2

FIG.3